# EUROPEAN PATENT SPECIFICATION

(11) **EP 3 254 223 B1**
(45) Date of publication and mention of the grant of the patent: **29.07.2020**
(21) Application number: 15881014.3
(22) Date of filing: 08.02.2015
(51) Int. Cl.: G06F 21/55, H04L 29/06, H04W 12/12, H04W 4/70

(54) **SECURITY SYSTEM FOR MACHINE TO MACHINE CYBER ATTACK DETECTION AND PREVENTION**
SICHERHEITSSYSTEM ZUR MASCHINE-MASCHINE-CYBERANGRIFFSDETEKTION UND -VERHINDERUNG
SYSTÈME DE SÉCURITÉ POUR LA DÉTECTION ET LA PRÉVENTION D'UNE CYBERATTAQUE DE COMMUNICATION ENTRE MACHINES

(43) Date of publication of application: 13.12.2017
(73) Proprietor: Tower-Sec Ltd., 4501307 Hod Hasharon (IL)
(72) Inventor: RUVIO, Guy, Elad (IL); DICKMAN, Saar, Tzur Moshe (IL); WEISGLASS, Yuval, Kfar Sava (IL)
(74) Representative: Rummler, Felix
(86) International application number: PCT/IL2015/050143
(87) International publication number: WO 2016/125133

(56) References cited:
- US-A1- 2010 057 485
- US-A1- 2010 057 485
- US-A1- 2013 127 618
- US-A1- 2013 127 618

## Description

### FIELD OF THE INVENTION

The present invention relates to security systems and methods in general and in particular to protecting machine to machine systems from cyber-attacks.

### BACKGROUND OF THE INVENTION

Machine to machine (M2M) communication is the basis for many automated processes. This interaction or communication between at least two machines, without human intervention enables wireless coordination between at least two machines and reflects on machine decision making. Machine to machine communications mainly uses existing networks, such as wireless networks used by the public (e.g. cellular networks, WLAN), to transmit the data. This technology is employed in many fields such as meter reading by companies supplying electricity or gas, communication between vending machines and their supplier, sensor reading of various steps in a production process of which at least one step is done remotely, city automation (e.g. traffic control systems) employing the communication of information from remote sensors to at least one computer. M2M communication is exposed to cyber-attacks from the outside. Affecting machine to machine communication can cause harm to any system relying on feedback from remote locations for its operation.

Considering the large number of M2M connected devices expected to be deployed, in a highly distributed network, global enforcement of communication security might not be practically feasible. The conventional centralized IT security network model, protected by a firewall, is challenged by the need for a dispersed model. M2M connected devices are expected to operate unattended for long periods of time which requires robust security mechanisms such as authentication, the ability to recognize and isolate misbehaved machines (such as terminals), tamperproof design and others. Many M2M connected machines are limited in their power consumption, therefore energy efficient security mechanisms should be provided. Many types of cyber-attacks are known in the art, these include false representation of data, disabling at least one machine, obtaining the information from a communication, hijacking a communication, and others.

Several examples are known in the art that disclose detection and/or protection of machine to machine communication.

US 20130291100 A1, titled: "DETECTION AND PREVENTION OF MACHINE-TO-MACHINE HIJACKING ATTACKS" discloses a method for detecting and preventing M2M hijacking attacks via a network node based system. The method includes receiving at a network node a packet destined for an intended destination. The network node determines whether the packet is associated with M2M communication, and whether forwarding of the packet to the intended destination is prohibited. Forwarding of the packet is prohibited when the packet is originated from a first machine to-machine device and is destined to a first host other than a M2M server associated with M2M communications.

WO 2013015994 A1, titled: "MONITORING MOBILE APPLICATION ACTIVITIES FOR MALICIOUS TRAFFIC ON A MOBILE DEVICE", discloses systems and methods for monitoring mobile application activities for malicious traffic on a mobile device. One embodiment of a method which can be implemented on a system includes, monitoring application activities of a mobile application on the mobile device, detecting, from the application activities, suspicious activity, and/or blocking traffic from which the suspicious activity is detected.

EP 1282283 A2, titled: "MALWARE SCANNING USING A NETWORK BRIDGE" discloses a network bridge that has an associated malware scanner that serves to concatenate portions of a data file from within data packets intercepted by the network bridge and then scan the data file concerned before the data file is forwarded to its intended recipient by the network bridge. The network bridge may be inserted in a network topology without requiring significant network configuration changes. The network bridge may include a packet analysis unit that serves to intercept only data packets having a predetermined network layer protocol or a predetermined application layer protocol.

US 6292862 B1, titled: "BRIDGE MODULE" discloses a bridge module that is connected between at least two bus systems and is suitable for serial data transfer of binary data from one of the bus systems to the other one of the bus systems. A single memory device is provided for buffer storage of the data during a data transfer. The data transfer, which is controlled exclusively by the data to be transmitted, is thus carried out in a simple manner and completely automatically, without the interposition of a processor unit.

The document US 2013/127618, 23rd May 2013 (2013-05-23), discloses a method wherein communications traffic associated with a sensor network from a sensor that is a member of the sensor network is received, the communications traffic is analysed to determine if an attack is occurring on the sensor network, and an alarm is generated if the attack is occurring on the sensor network.

However, none of the above prior art disclosures provide embedded detection and protection to an M2M communication enabled connected machine. Thus there is a long felt need for an embedded security bridge relaying communication between a Machine-to-Machine (M2M) wireless module and a connected machine's MPU, providing a system and method capable of detecting and preventing cyber-attacks from a machine without human interaction.

### SUMMARY OF THE INVENTION

The invention is disclosed by the independent claims. Further embodiments are described by the dependent claims. The present invention provides an embedded security bridge (ESB), useful for machine to machine (M2M) communication cyber-attack detection and prevention, the ESB operatively connected to: (a) at least one proximal machine; and, (b) at least one M2M module, the M2M module is further in communication with at least one remote machine, the M2M module is configured to enable communication between at least one remote machine and at least one proximal machine through the ESB; the ESB comprises: (a) one or more inspection units, configured for analysis of the communication for identifying communication and/or content suspicious as malicious; and, (b) one or more decision units operatively connected to the inspection unit, the decision unit is configured to perform at least one action based on the analysis of at least one inspection unit; wherein the ESB is configured to detect by means of the inspection unit and prevent by means of the decision unit cyber-attacks on the proximal machine, the remote machine, or both.

It is another object of the current invention to disclose the ESB as defined in any of the above, wherein the ESB is configured to detect and prevent at least one of the following activities, by means of said inspection unit and said decision unit: (a) unauthorized use of at least one said remote machine, said proximal machine or both; (b) unauthorized access to said communication; (c) hijacking of at least a portion of said communication session; (d) communication timing attacks; (e) information attacks; (f) credentials attacking; (g) configuration attacks; (h) attacks against said proximal machine; (i) attack on the core network; and,(j) user data and/ or identity attacks.

It is another object of the current invention to disclose the ESB as defined in any of the above, wherein at least a portion of the SBS is implemented into the proximal machine.

It is another object of the current invention to disclose the ESB as defined in any of the above, wherein the ESB further comprises one or more communication handler unit configured for communication with both at least one proximal machine's main processing unit (MPU) and the ESB.

It is another object of the current invention to disclose the ESB as defined in any of the above, wherein the ESB is implemented in at least one of the following ways: (a) externally connected between the proximal machine's MPU and the M2M module; (b) embedded in the proximal machine; and, (c) embedded in the M2M module.

.It is another object of the current invention to disclose the ESB as defined in any of the above, wherein the inspection unit is configured to analyze the communication by at least one of the following: (a) inspection of at least one communication packet content; (b) validation of the identity and authenticity of the communication originator; and, (c) verification of at least one characteristic of the network environment serving the M2M module.

It is another object of the current invention to disclose the ESB as defined in any of the above, wherein at least one inspection unit actively interrogates the M2M module for at least one characteristic of its serving network environment.

It is another object of the current invention to disclose the ESB as defined in any of the above, wherein at least one action, performed by at least one decision unit, is selected from the following: (a) forwarding the communication on to at least one remote machine or the proximal machine; (b) block at least a portion of the communication; (c) alter at least a portion of the content and/or at least a portion of at least one communication packet before relaying it to at least one remote machine or the proximal machine; (d) generate an alert; and, (e) send a trigger to at least one of the following: at least one proximal machine, at least one remote machine, and, a third party.

It is another object of the current invention to disclose the ESB as defined in any of the above, wherein the decision unit is configured to generate at least one event, the event comprising at least one of the following: the analysis of the inspection unit, the communication details, and the action performed by the decision unit, further wherein the event is logged by the decision unit.

It is another object of the current invention to disclose the ESB as defined in any of the above, wherein the decision unit is configured to select the action preformed based on a security policy.

It is another object of the current invention to disclose the ESB as defined in any of the above, wherein the security policy is applied according to the inspection unit analysis of at least one of the following: (a) current communication packet; (b) at least one previously received communication packet; and, (c) at least one combination of a series of communication packets received.

It is another object of the current invention to disclose the ESB as defined in any of the above, wherein the security policy is selected from a group consisting of: predefined, adjustable, self-learning, and any combination thereof.

It is another object of the current invention to disclose the ESB as defined in any of the above, wherein the M2M module comprises one or more connection interface to the network that is wireless, physical, or both.

It is another object of the current invention to disclose the ESB as defined in any of the above, wherein the M2M wireless network comprises one or more of the following: (a) cellular network; (b) Wi-Fi network; (c) satellite communication network; (d) ad-hoc point-to-point wireless communication; (e) acoustic transmissions; (f) near field communication (NFC); (g) RFID; (h) blue tooth network; (i) ZigBee; and, (g) WiMAX.

The present invention provides an embedded security bridge system (SBS) for machine to machine (M2M) communication cyber-attack detection and prevention, comprising: (a) one or more M2M module in communication with at least one remote machine, the M2M module configured for enabling communication between at least one remote machine and at least one first proximal machine; (b) at least one embedded security bridge (ESB) the ESB operatively connected to: (i) at least one proximal machine; and, (ii) at least one M2M module, the ESB comprises: (i) one or more inspection units, configured for analysis of the communication for identifying communication and/or content suspicious as malicious; and, (ii) one or more decision units operatively connected to the inspection unit, the decision unit is configured to perform at least one action based on the analysis of at least one inspection unit; wherein the M2M module is configured to enable communication between at least one first proximal machine and at least one second remote machine through the ESB; further wherein the ESB is configured to detect by means of the inspection unit and prevent by means of the decision unit cyber-attacks on the proximal machine, the remote machine, or both.

It is another object of the current invention to disclose the SBS as defined in any of the above, wherein the ESB is configured to detect and prevent at least one of the following activities by means of the inspection unit and the decision unit: (a) unauthorized use of at least one remote machine, proximal machine or both; (b) unauthorized access to the communication; (c) hijacking of at least a portion of the communication session; (d) communication timing attacks; (e) information attacks; (f) credentials attacking; (g) configuration attacks; (h) attacks against the proximal machine; (i) attack on the core network; and,(j) user data and/ or identity attacks.

It is another object of the current invention to disclose the SBS as defined in any of the above, wherein at least a portion of the SBS is implemented into the proximal machine.

It is another object of the current invention to disclose the SBS as defined in any of the above, wherein the ESB further comprises one or more communication handler unit configured for communication with both at least one proximal machine's main processing unit (MPU) and the ESB.

It is another object of the current invention to disclose the SBS as defined in any of the above, wherein the ESB is implemented in at least one of the following ways: (a) externally connected between the proximal machine's MPU and the M2M module; (b) embedded in the proximal machine; and, (c) embedded in the M2M module.

It is another object of the current invention to disclose the SBS as defined in any of the above, wherein the inspection unit is configured to analyze the communication by at least one of the following: (a) inspection of at least one communication packet content; (b) validation of the identity and authenticity of the communication originator; and, (c) verification of at least one characteristic of the network environment serving the M2M module.

It is another object of the current invention to disclose the SBS as defined in any of the above, wherein at least one inspection unit actively interrogates the M2M module for at least one characteristic of its serving network environment.

It is another object of the current invention to disclose the SBS as defined in any of the above, wherein at least one action, performed by at least one decision unit, is selected from the following: (a) forwarding the communication on to at least one remote machine or the proximal machine; (b) block at least a portion of the communication;(c) alter at least a portion of the content and/or at least a portion of at least one communication packet before relaying it to at least one remote machine or the proximal machine; (d) generate an alert; and, (e) send a trigger to at least one of the following: at least one proximal machine, at least one remote machine, and, a third party.

It is another object of the current invention to disclose the SBS as defined in any of the above, wherein the decision unit is configured to generate at least one event, the event comprising at least one of the following: the analysis of the inspection unit, the communication details, and the action performed by the decision unit, further wherein the event is logged by the decision unit.

It is another object of the current invention to disclose the SBS as defined in any of the above, wherein the decision unit is configured to select the action preformed based on a security policy.

It is another object of the current invention to disclose the SBS as defined in any of the above, wherein the security policy is applied according to the inspection unit analysis of at least one of the following: (a) current communication packet; (b) at least one previously received communication packet; and, (c) at least one combination of a series of communication packets received.

It is another object of the current invention to disclose the SBS as defined in any of the above, wherein the security policy is selected from a group consisting of: predefined, adjustable, self-learning, and any combination thereof.

It is another object of the current invention to disclose the SBS as defined in any of the above, wherein the M2M module comprises one or more connection interface to the network that is wireless, physical, or both.

It is another object of the current invention to disclose the SBS as defined in any of the above, wherein the M2M wireless network comprises one or more of the following: (a) cellular network; (b) Wi-Fi network; (c) satellite communication network; (d) ad-hoc point-to-point wireless communication; (e) acoustic transmissions; (f) near field communication (NFC); (g) RFID; (h) blue tooth network; (i) ZigBee; and,(j) WiMAX.

The present invention provides a method for machine to machine (M2M) communication cyber-attack detection and prevention, the method characterized by the following steps: (a) providing at least one embedded security bridge (ESB), useful for machine to machine (M2M) communication cyber-attack detection and prevention, the ESB operatively connected to: (i) at least one proximal machine; and, (ii) at least one M2M module, the M2M is further in communication with at least one remote machine, the M2M module is configured to enable communication between at least one remote machine and at least one proximal machine through the ESB; the ESB comprising: (i) one or more inspection units, configured for analysis of the communication for identifying communication and/or content suspicious as malicious; and, (ii) one or more decision units operatively connected to the inspection unit, the decision unit is configured to performing at least one action based on the analysis of at least one inspection unit; (b) receiving communication originating from the proximal machine or the remote machine through the ESB; (c) analyzing the communication by the inspection unit for identifying communication and/or content suspicious as malicious; and, (d) preforming at least one action by the decision unit based on the analysis of the communication and/or content by the inspection unit.

It is another object of the current invention to disclose the method as defined in any of the above, additionally comprising the step of the ESB detecting and preventing at least one of the following activities by means of the inspection unit and the decision unit: (a) unauthorized use of at least one remote machine, proximal machine or both; (b) unauthorized access to the communication; (c) hijacking of at least a portion of the communication session; (d) communication timing attacks; (e) information attacks; (f) credentials attacking; (g) configuration attacks; (h) attacks against the proximal machine; (i) attack on the core network; and, (j) user data and/ or identity attacks.

It is another object of the current invention to disclose the method as defined in any of the above, additionally comprising the step of providing the ESB at least partly implemented into the proximal machine.

It is another object of the current invention to disclose the method as defined in any of the above, additionally comprising the step of further providing one or more communication handler unit operatively connected for communication with both at least one proximal machine's main processing unit (MPU) and the ESB.

It is another object of the current invention to disclose the method as defined in any of the above, additionally comprising the step of providing the ESB implemented in at least one of the following ways: (a) externally connected between the proximal machine's MPU and the M2M module; (b) embedded in the proximal machine; and, (c) embedded in the M2M module.

It is another object of the current invention to disclose the method as defined in any of the above, additionally comprising the step of configuring the inspection unit to analyzing the communication by at least one of the following: (a) inspecting of at least one communication packet content; (b) validating of the identity and authenticity of the communication originator; and, (c) verifying of at least one characteristic of the network environment serving the M2M module.

It is another object of the current invention to disclose the method as defined in any of the above, additionally comprising the step of the inspection unit actively interrogating the M2M module for at least one characteristic of its serving network environment.

It is another object of the current invention to disclose the method as defined in any of the above, additionally comprising the step of the decision unit preforming at least one of the following actions: (a) forwarding the communication on to at least one machine; (b) blocking the communication; (c) deleting the communication; (d) altering at least a portion of the content and/or at least a portion of at least one communication packet before relaying it to at least one remote machine or the proximal machine; (e) generating an alert; and, (f) sending a trigger to at least one of the following: at least one proximal machine, at least one remote machine, and, a third party.

It is another object of the current invention to disclose the method as defined in any of the above, additionally comprising the step of the decision unit configuring an event comprising at least one of the following: the analysis of the inspection unit, the communication details, and the action performed by the decision unit, further wherein the event is logged by the decision unit.

It is another object of the current invention to disclose the method as defined in any of the above, additionally comprising the step of the decision unit determining the action preformed based on a security policy.

It is another object of the current invention to disclose the method as defined in any of the above, additionally comprising the step of applying the security policy according to at least one of the following: (a) current communication packet; (b) at least one previously received communication packet; and, (c) at least one combination of a series of communication packets received.

It is another object of the current invention to disclose the method as defined in any of the above, additionally comprising the step of selecting the security policy from a group consisting of: predefined, adjustable, self-learning, and any combination thereof.

It is another object of the current invention to disclose the method as defined in any of the above, additionally comprising the step of providing the M2M module comprising a connection interface to the network that is wireless, physical, or both.

It is another object of the current invention to disclose the method as defined in any of the above, additionally comprising the step of providing the wireless network comprising one or more of the following: (a) cellular network; (b) Wi-Fi network; (c) satellite communication network; (d) ad-hoc point-to-point wireless communication; (e) acoustic transmissions; (f) near field communication (NFC); (g) RFID; (h) blue tooth network; (i) ZigBee; and, (j) WiMAX.

### BRIEF DESCRIPTION OF THE FIGURES

In the following detailed description of the preferred embodiments, reference is made to the accompanying drawings that form a part hereof, and in which are shown by way of illustration specific embodiments in which the invention may be practiced. It is understood that other embodiments may be utilized and structural changes may be made without departing from the scope of the present invention. The present invention may be practiced according to the claims without some or all of these specific details. For the purpose of clarity, technical material that is known in the technical fields related to the invention has not been described in detail so that the present invention is not unnecessarily obscured. In the accompanying drawing:
**Fig. 1** is a schematic out of scale illustration of an ESB, connected to a proximal machine and to an M2M module in connection with a remote machine though at least one access network.
**Fig. 2** is a schematic out of scale illustration of an ESB comprising an inspection unit, M2M module, communication handler unit and a decision unit;
**Fig. 3** is a schematic diagram of an SBS in which an ESB is configured to be integrated into a proximal machine, together with an M2M module;
**Fig. 4** is a schematic diagram of an SBS in which an ESB is configured to be integrated into a proximal machine MPU;
**Fig. 5** is a schematic diagram of an SBS in which an ESB is configured to be integrated into an M2M module; and,
**Fig. 6** is a schematic diagram of a method for machine to machine (M2M) communication cyber-attack detection and prevention.

### DETAILED DESCRIPTION OF THE PREFERRED EMBODIMENTS

In the following detailed description of the preferred embodiments, reference is made to the accompanying drawings that form a part hereof, and in which are shown by way of illustration specific embodiments in which the invention may be practiced. It is understood that other embodiments may be utilized and structural changes may be made without departing from the scope of the present invention. The present invention may be practiced according to the claims without some or all of these specific details. For the purpose of clarity, technical material that is known in the technical fields related to the invention has not been described in detail so that the present invention is not unnecessarily obscured.

The essence of the present invention is to provide an embedded security bridge (ESB), useful for machine to machine (M2M) communication cyber-attack detection and prevention, the ESB operatively connected to: at least one proximal machine and, to at least one M2M module. The M2M is operably in communication with the proximal machine through the security bridge and operably in communication with at least one remote machine. The ESB includes: one or more inspection units, configured for analysis of the communication for identifying communication and/or content suspicious as malicious, and, one or more decision units operatively connected to the inspection unit. The decision unit is configured to perform at least one action based on the analysis of at least one inspection unit. The ESB is configured to detect by means of the inspection unit and prevent by means of the decision unit cyber-attacks on the proximal machine, at least one remote machine, or both.

Further, the essence of the present invention is to provide an embedded security bridge system (SBS) for machine to machine (M2M) communication cyber-attack detection and prevention, comprising: one or more M2M module in communication with at least one remote machine, the M2M module configured for enabling communication between at least one remote machine and at least one first proximal machine, and, at least one embedded security bridge (ESB). The ESB is operatively connected to at least one proximal machine, and, to at least one M2M module. The ESB comprises: one or more inspection units, configured for analysis of the communication for identifying communication and/or content suspicious as malicious; and, one or more decision units operatively connected to the inspection unit, the decision unit is configured to perform at least one action based on the analysis of at least one inspection unit. The M2M module is configured to enable communication between at least one first proximal machine and at least one second remote machine through the ESB. Further, the ESB is configured to detect by means of the inspection unit and prevent by means of the decision unit cyber-attacks on the proximal machine, at least one remote machine, or both.

It is further yet the essence of the present invention to provide a method for machine to machine (M2M) communication cyber-attack detection and prevention, by using an ESB, or an SBS.

The term **"machine to machine communication"** or **'M2M communication',** refers hereinafter to any communication between at least two machines (electronic and/or mechanical devices) that does not need human intervention and/or supervision. The communication can be interactive information interchange, unidirectional transmission in either direction, or any combination of both. Further, the communication can be between machines of the same or different types.

The term **"bridge",** refers hereinafter to a communication device used to relay communication between two or more other devices.

Additionally or alternatively, the M2M module establishes communication through at least one machine trusted environment (TRE).

The term **"validation"** refers hereinafter to the ability to technically asses the state of a system and/ or communication for all security relevant properties. This can be assessing the origin of the data from the proximal machine that is validated as these non-limiting examples: manufacture details of the device, initial deployment, maintenance history, configuration change history, examination that the proximal machine's autonomous verification has been successfully completed, a validation can result from the successful exchange of encryption keys, authentication tokens and codes, as known in the art.

The term **"M2M module",** refers hereinafter to a wireless communication device enabling communication between two or more remotely stationed machines. The M2M module usually communicates over cellular network such as GSM, CDMA, UMTS and etc. Additionally or alternatively, the M2M wireless communication can be in a cellular M2M architecture or capillary M2M architecture. Cellular M2M architecture refers to a model where each M2M proximal (connected machine) is directly connected to a network (e.g. a cellular network). Capillary M2M architecture refers to a model in which M2M terminals (proximal machines) in a defined area are connected by a capillary network in a mesh like or tree topology to one gateway enabling a network (e.g. cellular network) connection. The gateway can impose further inspection, transformation and/ or manipulation of the data. Additionally or alternatively, the M2M module can communicate over any network such as these non-limiting examples: satellite communication, cellular network, internet, WAN, WLAN, VPN, and etc.

The term **"proximal machine"** or **"terminal",** refers hereinafter to any machine that is operatively connected to at least one embedded security bridge and passes at least a portion of a communication therethrough and to an M2M module to connect to at least one second **remote machine,** such as these non-limiting examples: a vending machine, a monitoring device, a gate controller, a sensor, a medical device, a meter, any production machine, 3D printer, a camera, an electronic lock, an ATM, a tracking device (e.g. real time parcel tracking), point of sale data providing devices, a computer, a PDA, a cellular phone and etc.

The term **"Main Processing Unit"** or **"MPU",** refers hereinafter to the proximal machine's main processing hardware and software.

The term **"wireless network interface"** refers herein to a connection of a computer to the wireless network media over which transmissions are sent and received.

The term **"access network",** refers hereinafter to the medium used to convey communication packets between the proximal machine and the remote machine. As non-limiting examples the network can be such as WAN (wide area network), Internet, LAN (local area network), MAN (metro area network), VLAN (Virtual Local Area Network), PAN (Personal Area Network), VPN (Virtual Private Network), etc., utilizing such as these non-limiting examples: cellular network, cellular network, Wi-Fi network, satellite communication network, ad-hoc point-to-point wireless communication, acoustic transmissions, near field communication (NFC), RFID, blue tooth network; ZigBee, WiMAX, and etc.

The term **"packet",** or **"communication packet"** refers herein to one unit of binary data capable of being communicated through a computer network. To improve communication performance and reliability, each message sent between two network devices is often subdivided into packets by the underlying hardware and software. Depending on the protocol, packets are usually constructed in some standard format determining their boundaries, origin and destination.

The term **"cyber-attack"** refers herein to any attempted damage, unauthorized use or unauthorized access to M2M communication or machines. This includes, as non-limiting examples:
Unauthorized use of at least one machine, unauthorized access to a communication.

Hijacking of at least a portion of a communication session.

Communication timing attacks- such as delaying at least one communication packet, changing the order of forwarding at least one communication packets, and others as known in the art.

Information attacks- leaking of at least a portion of information, false representation of at least a portion of the data, disruption, change, erasing at least a portion of the packet format, or information, changing the origin or destination of the at least apportion of the communication, creating false communication, copying at least a portion of the information communicated.

Credentials attacking - such as malicious cloning of authentication tokens, attack on authentication tokens, sending false validations, and others as known in the art.

Configuration attacks - such as false software update, false change in configuration, changing the access control, and others as known in the art.

Attacks against the proximal machine- such as preventing at least one machine from operating normally, propagation of malicious code (e.g. virus or worm), physical attacks - such as forcing rebooting, re-flashing booting modified software, and others as known in the art.

Attack on the core network - such as traffic tunneling between impersonated devices, misconfiguration of the firewall in the gateway or router/modem, using a rogue device, propagation of malicious code (e.g. virus or worm), submitting multiple requests in an intention to overload the server or another service providing machine, overloading the communication network, and others as known in the art.

User data and identity attacks - such as impersonation of a device, retrieval of information of a specific user or a specific machine, changing the access of users to the system, and others as known in the art.

The term **"communication details"** interchangeably refers herein to any data associated with a communication such as these non-limiting examples: date, time, duration of the communication, at least a portion of the content, type of data communicated, format of the communication, amount of data packets, whether the communication is unilateral or bilateral, communication origin, communication destination, communication routing history, communication protocol, number of times the same communication has been received/ transmitted, rank of communication in an chronological order of communications, and any combination thereof.

The term **"security policy"** interchangeably refers herein to one or more requirement or rule, usually a set, determining the handling of communication by the ESB. Additionally or alternatively, the security policy can be predefined, modified, updated by a self-learning system, and any combination thereof. Additionally or alternatively, dedicated security systems can be incorporated in different ESBs according to each system specifications. The security policy can be configured to apply to all the communication received, transmitted or both, or to one or more communication packets. Additionally or alternatively, different security policies can be applied according to any of the communication details. The security policy is configured to detect and prevent cyber-attacks.

The serving network environment comprises at least a portion of a wireless network environment, and usually is completely based on wireless communication. The **characteristic of the wireless environment** can vary from the communication protocols used, frequencies used, type of data transferal over these frequencies, signal properties (e.g. signal to noise ratio, signal intensity and etc.) major network station used, origin of transmission, encryption types, any one or more of the **communication details,** and the like, as known in the art.

The SBS or any parts and portions thereof including connected modules thereto, can be implemented as a hardware circuit board and/ or chip including as non-limiting examples a one-way data transferring component, a one-time programmable component, an encryption module, and any combination thereof.

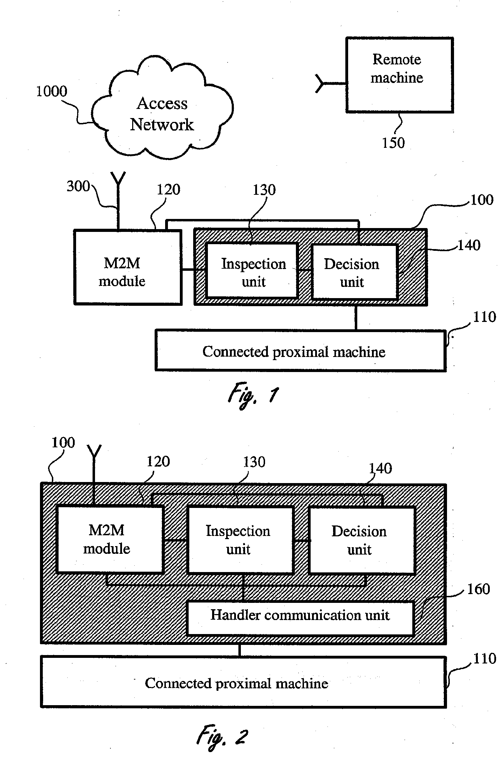

Reference is now made to **Fig. 1****,** schematically representing in an out of scale manner an embodiment of the invention. An embedded security bridge (ESB) (100), useful for machine to machine (M2M) communication cyber-attack detection and prevention, the ESB operatively connected to at least one (110) proximal machine; and, at least one M2M module (120). The M2M is further in communication with at least one remote machine (150), via an access network (1000). The M2M module (120) is configured to enable communication between at least one remote machine (150) and at least one proximal machine (110) through the ESB (100). The communication can be transmitted wirelessly by acoustic transmission, RF electromagnetic waves transmission, Wi-Fi, RFID, blue tooth network, ZigBee, WiMAX, and etc., and/ or physically through such as data wires, optical cables, electrically conductive material, and etc. The ESB (100) includes one or more inspection units (130), configured for analysis of the communication for identifying communication and/or content suspicious as malicious; and, one or more decision units (140) operatively connected to the inspection unit, the decision unit is configured to perform at least one action based on the analysis of at least one inspection unit. Further, the ESB (100) is configured to detect by means of the inspection unit and prevent by means of the decision unit cyber-attacks on the proximal machine, at least one remote machine, or both. The ESB (100) is configured to detect and prevent at least one of the following activities: (a) unauthorized use of at least one remote machine, proximal machine, or both; (b) unauthorized access to at least a portion of at least one remote machine, proximal machine, or both; (c) false representation of at least a portion of the communication; (d) false forwarding of at least a portion of at least one communication; (e) including malicious code in at least a portion of the communication; (f) cloning and multiplying the communication; (g) preventing at least one remote machine, proximal machine, or both, from operating normally; (h) hijacking of at least a portion of the communication; (i) leaking of at least a portion of information from at least one remote machine, proximal machine, or both; (j) changing the configuration of at least one remote machine, proximal machine, or both; (k) changing at least a portion of the communication selected from a group consisting of: content, origin data, destination, protocol format, and any combination thereof; and, (1) deleting at least a portion of the communication.

According to another embodiment of the invention, an ESB as defined above is disclosed, wherein the ESB is configured to detect and prevent at least one of the following activities by means of the inspection unit and the decision unit: (a) unauthorized use of at least one remote machine, proximal machine or both; (b) unauthorized access to the communication; (c) hijacking of at least a portion of the communication session; (d) communication timing attacks; (e) information attacks; (f) credentials attacking; (g) configuration attacks; (h) attacks against the proximal machine; (i) attack on the core network; and,(j) user data and identity attacks.

In yet another embodiment of the invention, an ESB as defined above is disclosed, wherein the ESB is configured to detect and prevent hijacking of at least a portion of the communication session. Communication hijacking, can be, as a non-limiting example impersonating a cellular communication transmission cell, by for example forging the cellular cell signature, and sending a malicious communication from an external source (not originating from at least one remote machine). In this example, the ESB is configured to detect the communication hijacking by examining any one or more of the Serving Cell identity, type of communication originated from that cell, network information provided by that cell, network information gathered from other network cells, signal measurements either provided by the serving cell or independently measured by the M2M module, and any other characteristic of the wireless environment, as known in the art. Additionally or alternatively, the detection is made by actively interrogating the network for one or more characteristic of the network environment and communication means and methods, such as: the communication protocols used, frequencies used, type of data transferal over these frequencies (e.g. frequency hopping, time portion based), major network station used, origin of transmission, encryption types, which cellular cells were used during communication routing, analyzing the communication signal properties such as the signal to noise ratio in comparison to previous communication, and the like, as known in the art. The ESB is configured to prevent the detected malicious communication from reaching and / or reaching in its original form, at least one remote machine and/ or at least one proximal machine by such as: deleting at least a portion of the communication, forwarding the communication to a different recipient, rewriting/ modifying at least a portion of the communication (e.g. communication content, signature, encryption, encryption signature, a portion of the packet content, a portion of the packet frame, and etc.) before forwarding it to at least one recipient. Additionally or alternatively, the inspection and detection is performed by inspecting more than one communication packet, also analyzing the order, connection, and/or timing between communication packets.

According to another embodiment of the invention, an ESB as defined above is disclosed, wherein the ESB is configured to detect and prevent at least one of the following activities: (a) unauthorized use of at least one remote machine, the proximal machine, or both; (b) unauthorized access to at least a portion of at least one remote machine, the proximal machine, or both; (c) false representation of at least a portion of the communication; (d) false forwarding of at least a portion of at least one communication packet; (e) including malicious code in at least a portion of the communication; (f) cloning and multiplying at least a portion of the communication; (g) preventing at least one remote machine, proximal machine, or both, from operating normally;(h) hijacking of at least a portion of the communication; (i) information leakage from at least one remote machine, the proximal machine, or both; (j) configuration change of at least one remote machine, the proximal machine, or both; (k) changing at least a portion of the communication selected from a group consisting of: content, origin data, destination data, protocol format, and any combination thereof; (1) deleting at least a portion of the communication; (m) delaying at least one communication packet; and, (n) changing the order of at least one communication packet.

According to another embodiment of the invention, an ESB as defined above is disclosed, wherein at least a portion of the SBS is implemented into the proximal machine.

According to another embodiment of the invention, an ESB as defined above is disclosed, wherein at least a portion of the M2M module is implemented into the ESB, the proximal machine, or both.

According to another embodiment of the invention, an ESB as defined above is disclosed, wherein the ESB further comprises one or more communication handler unit configured for communication with both at least one proximal machine's main processing unit (MPU) and the ESB.

According to another embodiment of the invention, an ESB as defined above is disclosed, wherein the ESB is implemented in at least one of the following ways: (a) externally connected between the proximal machine's MPU and the M2M module; (b) embedded in the proximal machine; and, (c) embedded in the M2M module.

According to another embodiment of the invention, an ESB as defined above is disclosed, wherein the inspection unit is configured to analyze the communication by at least one of the following: (a) inspection of at least one communication packet content; (b) validation of the identity and authenticity of the communication originator; and, (c) verification of at least one characteristic of the network environment serving the M2M module.

According to another embodiment of the invention, an ESB as defined above is disclosed, wherein at least one inspection unit actively interrogates the M2M module for at least one characteristic of its serving network environment.

According to another embodiment of the invention, an ESB as defined above is disclosed, wherein at least one decision unit preforms at least one of the following actions: (a) forwarding the communication on to at least one remote machine or the proximal machine; (b) block at least a portion of the communication; (c) alter at least a portion of the content and/or at least a portion of at least one communication packet before relaying it to at least one remote machine or the proximal machine; (d) generate an alert; and, (e) send a trigger to at least one of the following: at least one proximal machine, at least one remote machine, and, a third party.

The term **"a third party"** in reference to a recipient of at least one trigger sent by the ESB interchangeably refers herein to such as these non-limiting examples: a computer, a terminal, a phone, a cellular phone, a PDA, an E-mail, a visual alarm (lights, any physical difference observed visually), an audible alarm, a sensible alarm, a server, a security system, an administer, and etc.

Additionally or alternatively, the action is determined according to an output received by the inspection unit.

According to another embodiment of the invention, an ESB as defined above is disclosed, wherein the decision unit is configured to generate at least one event, the event comprising at least one of the following: the analysis of the inspection unit, the communication details, and the action performed by the decision unit, further wherein the event is logged by the decision unit.

According to another embodiment of the invention, an ESB as defined above is disclosed, wherein the decision unit is configured to select the action preformed based on a security policy.

According to another embodiment of the invention, an ESB as defined above is disclosed, wherein the security policy is applied according to the inspection unit analysis of at least one of the following: (a) current communication packet; (b) at least one previously received communication packet; and, (c) at least one combination of a series of communication packets received.

According to another embodiment of the invention, an ESB as defined above is disclosed, wherein the security policy is selected from a group consisting of: predefined, adjustable, self-learning, and any combination thereof.

Additionally or alternatively, the inspection unit is configured to generate at least one output, signifying at least partly the results of the inspection and /or analysis of the communication received. The inspection is of at least a portion of the communication, as non-limiting examples, the inspection can be of any level of implementation of the communication received, such as the application level, the transport level, the data link level, the internet level and etc. further the inspection can be of one or more packets, at least a portion of a packet (the address, the header, the content, at least a portion of the frame, and etc. Additionally or alternatively, the inspection unit will compare at least a portion of the communication received to predefined examples and/or templates of data known to be malicious. Additionally or alternatively, the inspection unit will detect patterns within at least a portion of the communication that are indicative of portions suspected to be malicious. Additionally or alternatively, the inspection unit will compare at least a portion of the communication and /or at least a portion of the communication properties to information retrieved in real time of the network characteristics, of the communication origin, of the expected communication other portions, of the packet number, of the communication protocol, and of the communication routing.

Additionally or alternatively, according to the results of the inspection unit analysis, embodied as at least one output, a decision will be made by the decision unit, according to a set of rules, providing a security policy, as to the next step in handling the communication received. As a non-limiting example, an output from the inspection unit is at least one of the following: suspected as malicious, not suspected as malicious, the level of threat estimated by the inspection unit, the implementation level in which the data suspected as malicious is found, the type of irregularity detected suspected as malicious, the number of these irregularities detected, and the location within the packet of the portion suspected as malicious.

Additionally or alternatively, the security policy is employed to determine which action is performed by the decision unit; this can be such as these non-limiting examples: if a communication is suspected as malicious by the inspection unit at a high level of probability (calculated by the ESB), the rule from the security policy will cause the communication to be deleted, and/or an event to be generated. Another example can be in the case of suspected malicious content in the level of the address of the communication the security policy can generate an action of rewriting at least a portion of the communication before forwarding the communication and /or generate an alarm. Another example is if a series of communication packets is suspected as malicious, the rule from the security policy can determine to generate blocking of these communications. Another example can be when at least a portion of a communication is suspected as malicious, and the output from the inspection unit includes a low probability value for the data to be malicious, the security policy rule can determine to generate the forwarding of that communication to at least one machine.

According to another embodiment of the invention, an ESB as defined above is disclosed, wherein the M2M module comprises one or more connection interface to the network that is wireless, physical, or both.

According to another embodiment of the invention, an ESB as defined above is disclosed, wherein the M2M wireless network comprises one or more, but not limited to, of the following: (a) cellular network; (b) Wi-Fi network; (c) satellite communication network; (d) ad-hoc point-to-point wireless communication; (e) acoustic transmissions; (f) near field communication (NFC); (g) RFID; (h) blue tooth network; (i) ZigBee; and, (g) WiMAX. Additionally or alternatively, the network can be any medium configured to allow the passage of communication packets, and/ or communication signals between at least two devices (such as a proximal machine and a remote machine). This, includes these non-limiting examples: optical communication, wireless communication, wired communication, acoustic communication, RF communication, chemically based communication, and etc., together with a protocol enabling such a communication.

Reference is now made to **Fig. 2** illustrating in an out-of-scale manner an ESB (100) comprising an inspection unit (130), M2M module (120), communication handler unit (160) and a decision unit (140), operatively connected to the proximal machine (110). In this embodiment the ESB incorporates the M2M module for transmitting/ receiving communication. Received communication is inspected by the inspection unit that produces an analysis to the decision unit. The decision unit employs at least one security policy and decides whether the information will be transmitted, received, modified, deleted, or any combination thereof by the M2M module. The ESB (100) is operatively connected to a communication handler unit (160). Additionally or alternatively, the communication handler unit (160) can be interconnected as a separable physical piece to the ESB (100). Additionally or alternatively, the communication handler unit (160) is configured to allow access to the ESB (100) or any operatively connected part or module, for a user or through an intermediate device in order to preform one or more of these non-limiting examples: change the configuration of the ESB, change security policy, retrieve information logs, execute hardware/ software checkups, execute communication checkups to the proximal machine, the M2M module, the inspection unit, the decision unit, communication through the to/from remote machine and any combination thereof. In this embodiment, the communication is relayed through the ESB (100) comprising the M2M module (120) that is operatively connected to the inspection unit. The decision unit (140) is operatively connected to the inspection unit (130) and to the M2M module (120). The communication handler unit (160) is operatively connected to the M2M module (120), the inspection unit (130) and the decision unit (140). The ESB (100) is operatively connected to the proximal machine (110) thereto it transfers communication and therefrom it receives communication to be forwarded to at least one remote machine.

Additionally or alternatively, the decision unit is operatively connected to at least one of the following: the inspection unit, the M2M module, the ESB, the communication handler unit, the proximal machine, and any combination thereof.

Additionally or alternatively, the inspection unit is operatively connected to at least one of the following: the M2M module, the ESB, the communication handler unit, the proximal machine, the decision unit, and any combination thereof.

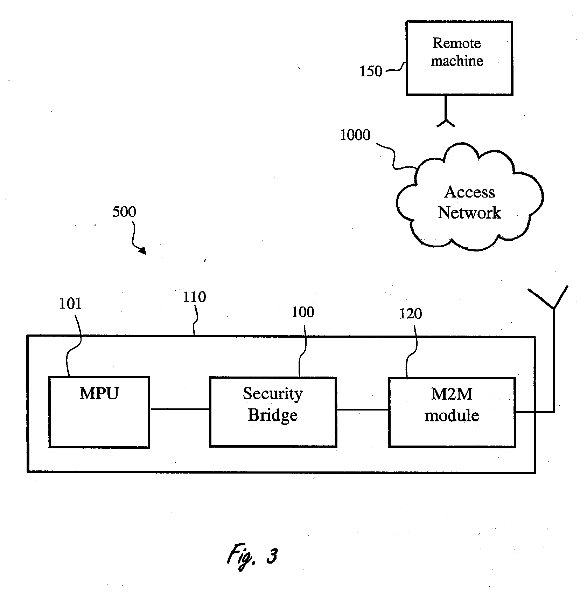

Reference is now made to **Fig. 3** illustrating a schematic diagram of an SBS (500) in which an ESB (100) is configured to be integrated into a proximal machine (110), operatively connected to the machine's main processing unit (MPU) (101), and to an M2M module receiving/ transmitting all communication therethrough. All communication to the MPU is received by the M2M module, passed to the security bridge (100), and only then reaches the MPU (101). All communication transmitted from the MPU is passed through the security bridge to the M2M module that communicates it through an access network (1000) to at least one remote machine (150). Additionally or alternatively, the MPU is configured to receive, transmit or both, information from an additional port.

According to another embodiment of the invention, an SBS as defined above is disclosed, wherein the ESB is configured to detect and prevent at least one of the following activities by means of the inspection unit and the decision unit: (a) unauthorized use of at least one remote machine, proximal machine or both; (b) unauthorized access to the communication; (c) hijacking of at least a portion of the communication session; (d) communication timing attacks; (e) information attacks; (f) credentials attacking; (g) configuration attacks; (h) attacks against the proximal machine; (i) attack on the core network; and,(j) user data and identity attacks

According to another embodiment of the invention, an SBS as defined above is disclosed, wherein the ESB is configured to detect and prevent at least one of the following activities:(a) unauthorized use of at least one remote machine, the proximal machine, or both; (b) unauthorized access to at least a portion of at least one remote machine, the proximal machine, or both; (c) false representation of at least a portion of the communication; (d) false forwarding of at least a portion of at least one communication packet; (e) including malicious code in at least a portion of the communication; (f) cloning and multiplying at least a portion of the communication; (g) preventing at least one remote machine, proximal machine, or both, from operating normally;(h) hijacking of at least a portion of the communication; (i) information leakage from at least one remote machine, the proximal machine, or both; (j) configuration change of at least one remote machine, the proximal machine, or both; (k) changing at least a portion of the communication selected from a group consisting of: content, origin data, destination data, protocol format, and any combination thereof; (1) deleting at least a portion of the communication; (m) delaying at least one communication packet; and, (n) changing the order of at least one communication packet.

According to another embodiment of the invention, an SBS as defined above is disclosed, wherein at least a portion of the SBS is implemented into the proximal machine.

According to another embodiment of the invention, an SBS as defined above is disclosed, wherein at least a portion of the M2M module is implemented into the ESB, the proximal machine, or both.

According to another embodiment of the invention, an SBS as defined above is disclosed, wherein the ESB further comprises one or more communication handler unit configured for communication with both at least one proximal machine's main processing unit (MPU) and the ESB.

According to another embodiment of the invention, an SBS as defined above is disclosed, wherein the ESB is implemented in at least one of the following ways: (a) externally connected between the proximal machine's MPU and the M2M module; (b) embedded in the proximal machine; and, (c) embedded in the M2M module.

According to another embodiment of the invention, an SBS as defined above is disclosed, wherein the inspection unit is configured to analyze the communication by at least one of the following: (a) inspection of at least one communication packet content; (b) validation of the identity and authenticity of the communication originator; and, (c) verification of at least one characteristic of the network environment serving the M2M module.

According to another embodiment of the invention, an SBS as defined above is disclosed, wherein at least one inspection unit actively interrogates the M2M module for at least one characteristic of its serving network environment.

According to another embodiment of the invention, an SBS as defined above is disclosed, wherein at least one decision unit preforms at least one of the following actions: (a) forwarding the communication on to at least one remote machine or the proximal machine; (b) block at least a portion of the communication;(c) alter at least a portion of the content and/or at least a portion of at least one communication packet before relaying it to at least one remote machine or the proximal machine; (d) generate an alert; and, (e) send a trigger to at least one of the following: at least one proximal machine, at least one remote machine, and, a third party.

According to another embodiment of the invention, an SBS as defined above is disclosed, wherein the decision unit is configured to generate at least one event, the event comprising at least one of the following: the analysis of the inspection unit, the communication details, and the action performed by the decision unit, further wherein the event is logged by the decision unit.

According to another embodiment of the invention, an SBS as defined above is disclosed, wherein the decision unit is configured to select the action preformed based on a security policy.

According to another embodiment of the invention, an SBS as defined above is disclosed, wherein the security policy is applied according to the inspection unit analysis of at least one of the following: (a) current communication packet; (b) at least one previously received communication packet; and, (c) at least one combination of a series of communication packets received.

According to another embodiment of the invention, an SBS as defined above is disclosed, wherein the security policy is selected from a group consisting of: predefined, adjustable, self-learning, and any combination thereof.

According to another embodiment of the invention, an SBS as defined above is disclosed, wherein the M2M module comprises one or more connection interface to the network that is wireless, physical, or both.

According to another embodiment of the invention, an SBS as defined above is disclosed, wherein the M2M wireless network comprises one or more, but not limited to, of the following: (a) cellular network; (b) Wi-Fi network; (c) satellite communication network; (d) ad-hoc point-to-point wireless communication; (e) acoustic transmissions; (f) near field communication (NFC); (g) RFID; (h) blue tooth network; (i) ZigBee; and,(j) WiMAX.

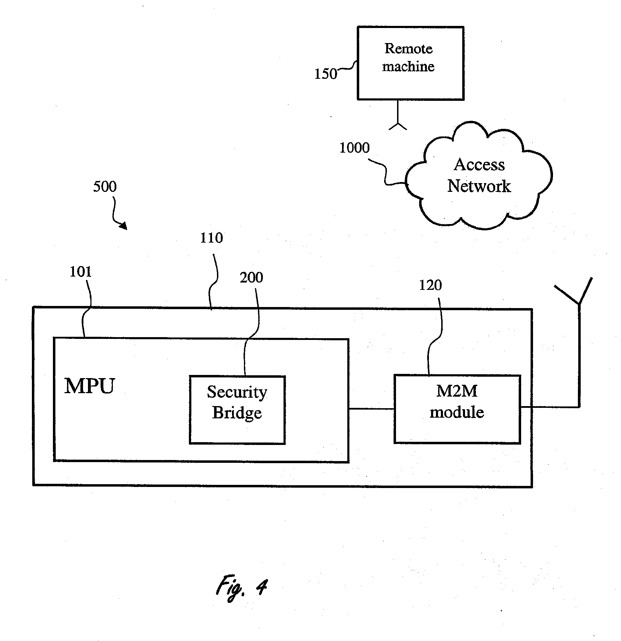

Reference is now made to **Fig. 4** illustrating a schematic diagram of an SBS (500) in which an ESB (100) is configured to be integrated into a proximal machine (110) MPU (101). The M2M module (120) comprises a communication interface to the access network (1000), enabling the communication to reach at least one remote machine (150). The M2M module (120) is operatively connected to the MPU (101) incorporating at least one ESB (100), configured to detect and prevent cyber-attacks, by employing at least one security policy.

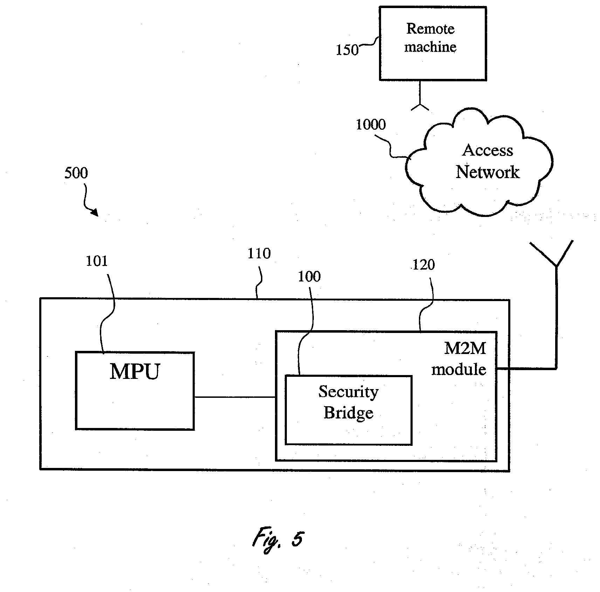

Reference is now made to **Fig. 5** illustrating a schematic diagram of an SBS (500) comprising an ESB (100) configured to be integrated into an M2M module. The M2M module is configured to enable communication through an access network (1000) to at least one remote machine (150). Further the M2M module is operatively connected to a machine's MPU (101) functioning as a bridge for the passage of communication thereto and/ or therefrom. Additionally or alternatively, the M2M module (120) comprising the ESB (100) is not integrated into the proximal machine (110) only operatively connected to it.

The present invention further discloses a method for machine to machine (M2M) communication cyber-attack detection and prevention, the method characterized by the following steps: (a) providing at least one embedded security bridge (ESB), useful for machine to machine (M2M) communication cyber-attack detection and prevention, the ESB operatively connected to: (i) at least one proximal machine; and, (ii) at least one M2M module, the M2M is further in communication with at least one remote machine, the M2M module is configured to enable communication between at least one remote machine and at least one proximal machine through the ESB; the ESB comprising: (i) one or more inspection units, configured for analysis of the communication for identifying communication and/or content suspicious as malicious; and, (ii) one or more decision units operatively connected to the inspection unit, the decision unit is configured to performing at least one action based on the analysis of at least one inspection unit; (b) receiving communication originating from the proximal machine or the remote machine through the ESB; (c) analyzing the communication by the inspection unit for identifying communication and/or content suspicious as malicious; and, (d) preforming at least one action by decision unit based on the analysis of the communication and/or content by the inspection unit.

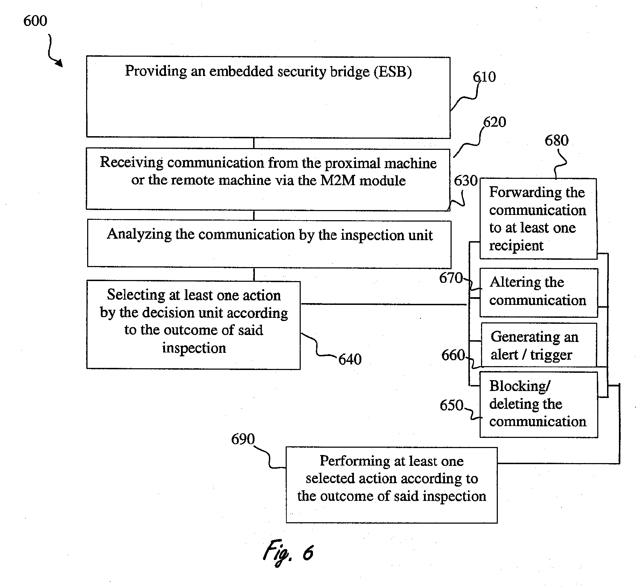

Reference is now made to **Fig. 6** illustrating a schematic diagram of a method (600) for machine to machine (M2M) communication cyber-attack detection and prevention. The first step (610) includes providing at least one embedded security bridge (ESB), useful for machine to machine (M2M) communication cyber-attack detection and prevention, the ESB is operatively connected to: (i) at least one proximal machine; and, (ii) at least one M2M module, the M2M is further in communication with at least one remote machine, the M2M module is configured to enable communication between at least one remote machine and at least one proximal machine through the ESB. The ESB comprises: (i) one or more inspection units, configured for analysis of the communication for identifying communication and/or content suspicious as malicious; and, (ii) one or more decision units operatively connected to the inspection unit, the decision unit is configured to perform at least one action based on the analysis of at least one inspection unit. The second step (620) is receiving communication originating from the proximal machine or the remote machine through the M2M module. The following step is (630) inspecting and analyzing the communication by the inspection unit for identifying communication and/or content suspicious as malicious; and, then the step (640) of the decision unit selecting at least one action based on the inspection and analysis of the communication and/or content from a group consisting of forwarding (680) the communication to at least one recipient (remote machine), altering (670) the communication, generating an alert, trigger or both, blocking, deleting (650) or both the communication, and any combination thereof. The following step (690) is performing the selected step.

The ESB is configured to detect by means of the inspection unit and prevent by means of the decision unit cyber-attacks on the proximal machine, at least one remote machine, or both.

## Claims

1. A security bridge (100), SB, for machine to machine, M2M, communication cyber-attack detection and prevention, the SB operatively wired connected to:
a. at least one proximal machine (110); and
b. at least one M2M module (120), the M2M module is further in communication with at least one remote machine (150) through a wireless network (1000), the M2M module (120) is configured to enable communication between the at least one remote machine (150) and the at least one proximal machine (110) through the SB (100);
wherein data communication between the at least one proximal machine (110) and the at least one M2M module (120) is conducted through the SB (100); the SB comprises:
a. one or more inspection units (130), configured for identifying malicious activity; and,
b. one or more decision units (140) operatively connected to the inspection unit (130), the decision unit (140) is configured to make decisions concerning the malicious activity identified by the at least one inspection unit (130) to prevent the proximal machine (110), the remote machine (150), or both from cyber-attacks;
wherein an action of the SB (100) to prevent the cyber-attacks comprising at least one of:
a. blocking at least a portion of the communication passing through the SB; and
b. altering at least a portion of the content and/or at least a portion of at least one communication packet passing through the SB before transferring it to the at least one M2M module or to the proximal machine.

2. The SB according to claim 1, wherein the malicious activity is selected from the group consisting of:
a. unauthorized use of at least one the remote machine (150), the proximal machine (110) or both;
b. unauthorized access to the communication;
c. hijacking of at least a portion of the communication session;
d. communication timing attacks;
e. information attacks;
f. credentials attacking;
g. configuration attacks;
h. attacks against the proximal machine (110);
i. attack on the core network;
j. user data and/ or identity attacks; and
k. any combination thereof.

3. The SB according to claim 1, wherein the SB (100) further comprises one or more communication handler unit (160) configured for communication with both the proximal machine's main processing unit, MPU, (101) and the SB (100).

4. The SB according to claim 1, wherein the SB (100) is implemented in at least one of the following ways:
a. externally connected between the proximal machine's MPU (101) and the M2M module (120);
b. embedded in the proximal machine (110); and,
c. embedded in the M2M module (120).

5. The SB according to claim 1, wherein the inspection unit (130) is configured to analyze the communication by at least one of the following:
a. inspection of at least one communication packet content;
b. validation of the identity and authenticity of the communication originator; and,
c. verification of at least one characteristic of the network environment serving the M2M module (120).

6. The SB according to claim 5, wherein at least one the inspection unit (130) actively interrogates the M2M module (120) for at least one characteristic of its serving network environment.

7. The SB according to claim 1, wherein the action to prevent the cyber-attacks, further comprising at least one of:
a. forwarding the communication on to at least one the remote machine (150) or the proximal machine (110);
b. generate an alert; and,
c. send a trigger to at least one of the following: at least one the proximal machine (110), at least one the remote machine (150), and, a third party.

8. The SB according to claim 1, wherein the decision unit (140) is configured to generate at least one event, the event comprising at least one of the following: the analysis of the inspection unit (140), the communication details, and the action performed by the decision unit (140); further wherein the event is logged by the decision unit (140).

9. The SB according to claim 1, wherein the decision unit (140) is configured to select the action performed based on a security policy.

10. The SB according to claim 9, wherein the security policy is applied according to the inspection unit analysis of at least one of the following:
a. current communication packet;
b. at least one previously received communication packet; and,
c. at least one combination of a series of communication packets received.

11. The SB according to claim 9, wherein the security policy is selected from a group consisting of: predefined, adjustable, self-learning, and any combination thereof.

12. The SB according to claim 1, wherein the M2M module (120) comprises one or more connection interface (300) to the network that is wireless, physical, or both.

13. The SB according to claim 12, wherein the M2M wireless network (1000) is selected from the group consisting of:
a. cellular network;
b. Wi-Fi network;
c. satellite communication network;
d. ad-hoc point-to-point wireless communication;
e. acoustic transmissions;
f. near field communication, NFC;
g. RFID;
h. blue tooth network;
i. ZigBee;
j. WiMAX; and
k. any combination thereof.

14. A method for machine to machine, M2M, communication cyber-attack detection and prevention, the method **characterized by** the following steps:
a. providing at least one security bridge, SB, (100), useful for machine to machine, M2M, communication cyber-attack detection and prevention, the SB operatively wired connected to:
i. at least one proximal machine (110); and,
ii. at least one M2M module (120), the M2M is further in communication with at least one remote machine (150) through a wireless network (1000), the M2M module (120) is configured to enable communication between the at least one remote machine (150) and the at least one proximal machine (110) through the SB;
the data communication between the at least one proximal machine (110) and the at least one M2M module (120) is conducted through the SB (100); the SB comprising:
i. one or more inspection units (130) for identifying malicious activity; and
ii. one or more decision units (140) operatively connected to the inspection unit (130), the decision unit (140) is configured to make decisions concerning the malicious activity identified by the one or more inspection units (130) to prevent the proximal machine (110), the remote machine (150), or both from cyber-attacks;
b. receiving a communication originating from the proximal machine (110) or the remote machine (150) and passing through the SB (100);
c. identifying the communication as malicious activity;
d. making a decision concerning the malicious activity to prevent the proximal machine (110), the remote machine (150), or both from cyber-attacks and
e. acting according to the decision by at least one of:
i. blocking at least a portion of the communication passing through the SB (100); and
ii. altering at least a portion of the content and/or at least a portion of at least one communication packet passing through the SB (100) before transferring it to the at least one M2M module (120) or to the proximal machine (110).

15. The method according to claim 14, additionally comprising the step of selecting a security policy from a group consisting of: predefined, adjustable, self-learning, and any combination thereof and the step of the decision unit determining the action preformed based on the security policy.

## Patentansprüche

1. Sicherheitsbrücke (SB, 100) für Maschine-Maschine(M2M)-Kommunikationscyberangriffsdetektion und -verhinderung, wobei die SB drahtgebunden wirkverbunden ist mit:
a. mindestens einer proximalen Maschine (110); und
b. mindestens einem M2M-Modul (120), wobei das M2M-Modul ferner mit mindestens einer entfernten Maschine (150) durch ein drahtloses Netzwerk (1000) in Kommunikation steht, wobei das M2M-Modul (120) dazu konfiguriert ist, Kommunikation zwischen der mindestens einen entfernten Maschine (150) und der mindestens einen proximalen Maschine (110) durch die SB (100) zu ermöglichen;
wobei Datenkommunikation zwischen der mindestens einen proximalen Maschine (110) und dem mindestens einen M2M-Modul (120) durch die SB (100) ausgeführt wird; wobei die SB Folgendes umfasst:
a. eine oder mehrere Inspektionseinheiten (130), die dazu konfiguriert sind, schädliche Aktivitäten zu identifizieren; und
b. eine oder mehrere Entscheidungseinheiten (140), die mit der Inspektionseinheit (130) wirkverbunden sind, wobei die Entscheidungseinheit (140) dazu konfiguriert ist, Entscheidungen über die durch die mindestens eine Inspektionseinheit (130) identifizierten schädlichen Aktivitäten zu treffen, um die proximale Maschine (110), die entfernte Maschine (150) oder beide vor Cyberangriffen zu schützen;
wobei eine Handlung der SB (100) zum Schützen vor den Cyberangriffen mindestens eines umfasst von:
a. Blockieren von mindestens einem Teil der Kommunikation, die durch die SB verläuft; und
b. Verändern von mindestens einem Teil des Inhalts und/oder von mindestens einem Teil von mindestens einem Kommunikationspaket, das durch die SB verläuft, bevor es an das mindestens eine M2M-Modul oder an die proximale Maschine weitergeleitet wird.

2. SB nach Anspruch 1, wobei die schädlichen Aktivitäten aus der Gruppe ausgewählt sind bestehend aus:
a. unbefugter Verwendung von mindestens einer der entfernten Maschine (150), der proximalen Maschine (110) oder beiden;
b. unbefugtem Zugriff auf die Kommunikation;
c. Missbrauchen von mindestens einem Teil der Kommunikationssitzung;
d. Kommunikations-Timing-Angriffen;
e. Informationsangriffen;
f. Anmeldedatenangriffen;
g. Konfigurationsangriffen;
h. Angriffen auf die proximale Maschine (110);
i. Angriff auf das Kernnetzwerk;
j. Benutzerdaten- und/oder Identitätsangriffen; und
k. einer beliebigen Kombination davon.

3. SB nach Anspruch 1, wobei die SB (100) ferner eine oder mehrere Kommunikationssteuerprogrammeinheiten (160) umfasst, die dazu konfiguriert sind, mit sowohl der Hauptverarbeitungseinheit (MPU, 101) der proximalen Maschine als auch der SB (100) zu kommunizieren.

4. SB nach Anspruch 1, wobei die SB (100) auf mindestens eine der folgenden Weisen umgesetzt ist:
a. extern zwischen der MPU (101) der proximalen Maschine und dem M2M-Modul (120) verbunden;
b. in die proximale Maschine (110) eingebettet; und
c. in das M2M-Modul (120) eingebettet.

5. SB nach Anspruch 1, wobei die Inspektionseinheit (130) dazu konfiguriert ist, die Kommunikation zu analysieren durch mindestens eines von:
a. Inspektion des Inhalts von mindestens einem Kommunikationspaket;
b. Validierung der Identität und Authentizität der Kommunikationsquelle; und
c. Verifizierung von mindestens einem Merkmal der Netzwerkumgebung, die das M2M-Modul (120) bedient.

6. SB nach Anspruch 5, wobei die mindestens eine Inspektionseinheit (130) das M2M-Modul (120) aktiv nach mindestens einem Merkmal seiner bedienenden Netzwerkumgebung befragt.

7. SB nach Anspruch 1, wobei die Handlung zum Schützen vor den Cyberangriffen ferner mindestens eines umfasst von:
a. Weiterleiten der Kommunikation an mindestens eine der entfernten Maschine (150) oder der proximalen Maschine (110);
b. Generieren eines Alarms; und
c. Senden eines Auslösers an mindestens eines von: der mindestens einen proximalen Maschine (110), der mindestens einen entfernten Maschine (150) und einer dritten Partei.

8. SB nach Anspruch 1, wobei die Entscheidungseinheit (140) dazu konfiguriert ist, mindestens ein Ereignis zu generieren, wobei das Ereignis mindestens eins umfasst von: der Analyse der Inspektionseinheit (140), den Kommunikationsdetails und der Handlung, die durch die Entscheidungseinheit (140) durchgeführt wird; ferner wobei das Ereignis durch die Entscheidungseinheit (140) protokolliert wird.

9. SB nach Anspruch 1, wobei die Entscheidungseinheit (140) dazu konfiguriert ist, die durchgeführte Handlung basierend auf einer Sicherheitsrichtlinie auszuwählen.

10. SB nach Anspruch 9, wobei die Sicherheitsrichtlinie in Übereinstimmung mit der Analyse der Inspektionseinheit von mindestens einem angewendet wird von:
a. einem aktuellen Kommunikationspaket;
b. mindestens einem bereits empfangenen Kommunikationspaket; und
c. mindestens einer Kombination einer Reihe von empfangenen Kommunikationspaketen.

11. SB nach Anspruch 9, wobei die Sicherheitsrichtlinie ausgewählt ist aus einer Gruppe bestehend aus: vordefiniert, anpassbar, selbstlernend und einer beliebigen Kombination davon.

12. SB nach Anspruch 1, wobei das M2M-Modul (120) eine oder mehrere Verbindungsschnittstellen (300) zu dem Netzwerk umfasst, de drahtlos, physisch oder beides sind.

13. SB nach Anspruch 12, wobei das drahtlose M2M-Netzwerk (1000) ausgewählt ist aus der Gruppe bestehend aus:
a. Mobilfunknetzwerk;
b. Wi-Fi-Netzwerk;
c. Satellitenkommunikationsnetzwerk;
d. drahtloser Ad-hoc-Punkt-zu-Punkt-Kommunikation;
e. akustischen Übertragungen;
f. Nahbereichskommunikation (NFC);
g. RFID;
h. Bluetooth-Netzwerk;
i. ZigBee
j. WiMAX; und
k. einer beliebigen Kombination davon.

14. Verfahren für Maschine-Maschine(M2M)-Kommunikationscyberangriffsdetektion und -verhinderung, wobei das Verfahren durch die folgenden Schritte gekennzeichnet ist:
a. Bereitstellen von mindestens einer Sicherheitsbrücke, SB, (100), die zur Maschine-Maschine(M2M)-Kommunikationscyberangriffsdetektion und -verhinderung nützlich ist, wobei die SB drahtgebunden wirkverbunden ist mit:
i. mindestens einer proximalen Maschine (110); und
ii. mindestens einem M2M-Modul (120), wobei das M2M ferner mit mindestens einer entfernten Maschine (150) durch ein drahtloses Netzwerk (1000) in Kommunikation steht, wobei das M2M-Modul (120) dazu konfiguriert ist, Kommunikation zwischen der mindestens einen entfernten Maschine (150) und der mindestens einen proximalen Maschine (110) durch die SB zu ermöglichen;
wobei die Datenkommunikation zwischen der mindestens einen proximalen Maschine (110) und dem mindestens einen M2M-Modul (120) durch die SB (100) ausgeführt wird; wobei die SB Folgendes umfasst:
i. eine oder mehrere Inspektionseinheiten (130) zum Identifizieren schädlicher Aktivitäten; und
ii. eine oder mehrere Entscheidungseinheiten (140), die mit der Inspektionseinheit (130) wirkverbunden sind, wobei die Entscheidungseinheit (140) dazu konfiguriert ist, Entscheidungen über die durch die eine oder die mehreren Inspektionseinheiten (130) identifizierten schädlichen Aktivitäten zu treffen, um die proximale Maschine (110), die entfernte Maschine (150) oder beide vor Cyberangriffen zu schützen;
b. Empfangen einer Kommunikation, die von der proximalen Maschine (110) oder der entfernten Maschine (150) ausgeht und durch die SB (100) verläuft;
c. Identifizieren der Kommunikation als eine schädliche Aktivität;
d. Treffen einer Entscheidung über die schädliche Aktivität, um die proximale Maschine (110), die entfernte Maschine (150) oder beide vor Cyberangriffen zu schützen; und
e. Handeln in Übereinstimmung mit der Entscheidung durch mindestens eins von:
i. Blockieren von mindestens einem Teil der Kommunikation, die durch die SB (100) verläuft; und
ii. Verändern von mindestens einem Teil des Inhalts und/oder von mindestens einem Teil von mindestens einem Kommunikationspaket, das durch die SB (100) verläuft, bevor es an das mindestens eine M2M-Modul (120) oder an die proximale Maschine (110) weitergeleitet wird.

15. Verfahren nach Anspruch 14, zusätzlich umfassend den Schritt des Auswählens einer Sicherheitsrichtlinie aus einer Gruppe bestehend aus: vordefiniert, anpassbar, selbstlernend und einer beliebigen Kombination davon, und den Schritt des Bestimmens durch die Entscheidungseinheit der durchgeführten Handlung basierend auf der Sicherheitsrichtlinie.

## Revendications

1. Pont de sécurité (100), SB, pour la détection et la prévention d'une cyberattaque de communication entre machines, M2M, le SB étant connecté opérationnellement par câble à :
a. au moins une machine proximale (110) ; et
b. au moins un module M2M (120), le module M2M est en outre en communication avec au moins une machine à distance (150) par le biais d'un réseau sans fil (1000), le module M2M (120) est conçu pour activer une communication entre l'au moins une machine à distance (150) et l'au moins une machine proximale (110) par le biais du SB (100) ;
dans lequel une communication de données entre l'au moins une machine proximale (110) et l'au moins un module M2M (120) est effectuée par le biais du SB (100) ; le SB comprend :
a. une ou plusieurs unités d'inspection (130), conçues pour identifier une activité malveillante ; et,
b. une ou plusieurs unités de décision (140) connectées opérationnellement à l'unité d'inspection (130), l'unité de décision (140) est conçue pour prendre des décisions concernant l'activité malveillante identifiée par l'au moins une unité d'inspection (130) pour prévenir des cyberattaques sur la machine proximale (110), la machine à distance (150), ou les deux ;
dans lequel une action du SB (100) pour prévenir les cyberattaques comprend au moins l'un parmi :
a. le blocage d'au moins une portion de la communication passant par le SB ; et
b. la modification d'au moins une portion du contenu et/ou d'au moins une portion d'au moins un paquet de communication passant par le SB avant son transfert à l'au moins un module M2M ou à la machine proximale.

2. SB selon la revendication 1, dans lequel l'activité malveillante est choisie dans le groupe consistant en :
a. une utilisation non autorisée d'au moins l'une de la machine à distance (150), de la machine proximale (110) ou des deux ;
b. un accès non autorisé à la communication ;
c. un détournement illicite d'au moins une portion de la session de communication ;
d. des attaques de synchronisation de communication ;
e. des attaques d'informations ;
f. une attaque de justificatifs d'identité ;
g. des attaques de configuration ;
h. des attaques contre la machine proximale (110) ;
i. une attaque sur le réseau d'infrastructure ;
j. des attaques de données d'utilisateur et/ou d'identité ; et
k. toute combinaison de ceux-ci.

3. SB selon la revendication 1, dans lequel le SB (100) comprend en outre une ou plusieurs unités gestionnaires de communication (160) conçues pour une communication à la fois avec l'unité principale de traitement, MPU (101) de la machine proximale et le SB (100).

4. SB selon la revendication 1, dans lequel le SB (100) est implémenté d'au moins l'une des manières suivantes :
a. connecté en externe entre la MPU (101) de la machine proximale et le module M2M (120) ;
b. incorporé dans la machine proximale (110) ; et,
c. incorporé dans le module M2M (120).

5. SB selon la revendication 1, dans lequel l'unité d'inspection (130) est conçue pour analyser la communication par au moins l'une parmi :
a. l'inspection d'au moins un contenu de paquet de communication ;
b. la validation de l'identité et de l'authenticité de l'émetteur de communication ; et,
c. la vérification d'au moins une caractéristique de l'environnement de réseau desservant le module M2M (120).

6. SB selon la revendication 5, dans lequel au moins l'une des unités d'inspection (130) interroge activement le module M2M (120) concernant au moins une caractéristique de son environnement de réseau de desserte.

7. SB selon la revendication 1, dans lequel l'action pour prévenir les cyberattaques comprend en outre au moins l'un parmi :
a. le réacheminement de la communication vers au moins l'une de la machine à distance (150) ou de la machine proximale (110) ;
b. la génération d'une alerte ; et,
c. l'envoi d'un déclencheur à au moins l'un des suivants : au moins l'une de la machine proximale (110), au moins l'une de la machine à distance (150), et un tiers.

8. SB selon la revendication 1, dans lequel l'unité de décision (140) est conçue pour générer au moins un événement, l'événement comprenant au moins l'un des suivants : l'analyse de l'unité d'inspection (140), les détails de communication, et l'action réalisée par l'unité de décision (140) ; dans lequel en outre l'événement est journalisé par l'unité de décision (140).

9. SB selon la revendication 1, dans lequel l'unité de décision (140) est conçue pour sélectionner l'action réalisée d'après une règle de sécurité.

10. SB selon la revendication 9, dans lequel la règle de sécurité est appliquée selon l'analyse de l'unité d'inspection d'au moins l'un des suivants :
a. un paquet de communication actuel ;
b. au moins un paquet de communication précédemment reçu ; et,
c. au moins une combinaison d'une série de paquets de communication reçus.

11. SB selon la revendication 9, dans lequel la règle de sécurité est choisie dans un groupe consistant en : prédéfinie, ajustable, autoapprentissage, et toute combinaison de ceux-ci.

12. SB selon la revendication 1, dans lequel le module M2M (120) comprend une ou plusieurs interfaces de connexion (300) au réseau qui sont sans fil, physiques, ou les deux.

13. SB selon la revendication 12, dans lequel le réseau sans fil M2M (1000) est choisi dans le groupe consistant en :
a. un réseau cellulaire ;
b. un réseau Wi-Fi ;
c. un réseau de communication par satellite ;
d. une communication sans fil point à point ad hoc ;
e. des transmissions acoustiques ;
f. une communication en champ proche, NFC ;
g. RFID ;
h. un réseau Bluetooth ;
i. ZigBee ;
j. WiMAX ; et
k. toute combinaison de ceux-ci.

14. Procédé de détection et de prévention d'une cyberattaque de communication entre machines, M2M, le procédé étant **caractérisé par** les étapes suivantes :
a. la fourniture d'au moins un pont de sécurité, SB (100), utile pour la détection et la prévention d'une cyberattaque de communication entre machines, M2M, le SB étant connecté opérationnellement par câble à :
i. au moins une machine proximale (110) ; et,
ii. au moins un module M2M (120), le M2M est en outre en communication avec au moins une machine à distance (150) par le biais d'un réseau sans fil (1000), le module M2M (120) est conçu pour activer une communication entre l'au moins une machine à distance (150) et l'au moins une machine proximale (110) par le biais du SB ;
la communication de données entre l'au moins une machine proximale (110) et l'au moins un module M2M (120) est effectuée par le biais du SB (100) ; le SB comprenant :
i. une ou plusieurs unités d'inspection (130) pour identifier une activité malveillante ; et
ii. une ou plusieurs unités de décision (140) connectées opérationnellement à l'unité d'inspection (130), l'unité de décision (140) est conçue pour prendre des décisions concernant l'activité malveillante identifiée par les une ou plusieurs unités d'inspection (130) pour prévenir des cyberattaques sur la machine proximale (110), la machine à distance (150), ou les deux ;
b. la réception d'une communication émise par la machine proximale (110) ou la machine à distance (150) et passant par le SB (100) ;
c. l'identification de la communication comme étant une activité malveillante ;
d. la prise d'une décision concernant l'activité malveillante pour prévenir des cyberattaques sur la machine proximale (110), la machine à distance (150), ou les deux et
e. action selon la décision par au moins l'un parmi :
i. le blocage d'au moins une portion de la communication passant par le SB (100) ; et
ii. la modification d'au moins une portion du contenu et/ou d'au moins une portion d'au moins un paquet de communication passant par le SB (100) avant son transfert à l'au moins un module M2M (120) ou à la machine proximale (110).

15. Procédé selon la revendication 14, comprenant de plus l'étape de sélection d'une règle de sécurité dans un groupe consistant en : prédéfinie, ajustable, autoapprentissage, et toute combinaison de ceux-ci et l'étape de détermination par l'unité de décision de l'action réalisée d'après la règle de sécurité.
